# EUROPÄISCHE PATENTSCHRIFT

(11) **EP 1 043 643 B1**
(45) Veröffentlichungstag und Bekanntmachung des Hinweises auf die Patenterteilung: **15.06.2005**
(21) Anmeldenummer: 00105539.1
(22) Anmeldetag: 16.03.2000
(51) Int. Cl.: G05B 19/418, G05B 19/042

(54) **Kabelsystem zur Verkabelung einer Zelle**
Cable system for wiring a cell
Système de cable pour le cablage d'une cellule

(30) Priorität: 03.04.1999 DE 19921654
(43) Veröffentlichungstag der Anmeldung: 11.10.2000
(73) Patentinhaber: Sew-Eurodrive GmbH & Co. KG, 76646 Bruchsal (DE)
(72) Erfinder: Schenk, Achim, 76149 Karlsruhe (DE); Schmidt, Josef, 76676 Graben-Neudorf (DE); Meyer, Harald, 75223 Niefern-Öschelbronn (DE)

(56) Entgegenhaltungen:
- EP-A- 0 881 551
- DE-A- 4 224 755
- DE-A- 19 719 232
- DE-C- 4 017 888
- US-A- 4 757 245
- US-A- 4 780 631

## Beschreibung

Die Erfindung betrifft ein Kabelsystem zur Verkabelung einer Zelle.

Bei komplexen industriellen Anlagen müssen das elektrische Netz und übergeordnete Steuerungen mit dezentralen Steuerungen, Sensoren, Aktoren, Antrieben, umfassend Motoren, Umrichter und Getriebe, verkabelt werden. Dabei werden Starkstromkabel, umfassend Starkstromleitungen, zur Übertragung großer Ströme verwendet. Die zentrale Steuerung überträgt Informationen, wie Daten, Programme und/oder dergleichen, zu den dezentralen Steuerungen. Bei der Übertragung werden die Informationen in einem Feldbusprotokoll, wie Profibus, Interbus, CAN-Bus oder dergleichen, codiert. Dabei werden Informationen von Feldgeräten, also Sensoren, Aktoren und Antrieben, an die dezentrale oder zentrale Steuerung übertragen und von dort empfangen.

Aus der Zeitschrift IEE, 43. Jahrgang 1998, Nr. 9, S. 16 ist die Zellbildung bei solchen komplexen Systemen bekannt. Eine Zelle oder Automatisierungszelle umfasst dabei mehrere Antriebe, jeweils bestehend aus Umrichter und zugehörigem Elektromotor. Die datentechnische Vernetzung erlaubt Anwendungen, wie komplexe mehrdimensionale Bahnsteuerungen, elektronische Getriebe oder dergleichen. Typischerweise ist die räumliche Ausdehnung einer solchen Zelle auf einige Meter, wie insbesondere 6 bis 10 Meter, beschränkt. Eine Anlage kann eine Mehrzahl solcher Zellen aufweisen.

Die in obiger Schrift zitierten Umrichter sind aus dem Handbuch 'MOVIDRIVE® Antriebsumrichter, Feldbus-Geräteprofil' Ausgabe 07/97 der Firma SEW-EURODRIVE GmbH & Co bekannt. Solche Umrichter umfassen einen Gleichrichter, der aus der NetzWechselspannung eine unipolare Spannung, also pulsierende Gleichspannung, als Zwischenkreisspannung für den Umrichter liefert. Zusätzlich umfassen die Umrichter eine programmierbare elektronische Schaltung, die auch Aufgaben einer Ablaufsteuerung oder Positioniersteuerung erfüllen kann, wie dies auch aus dem Handbuch 'MOVIDRIVE® Antriebsumrichter, Positionier- und Ablaufsteurerung IPOSplus' Ausgabe 10/97 der Firma SEW-EURODRIVE GmbH & Co bekannt ist.

Der Aufwand der Verkabelung ist beim Stand der Technik groß und auch kostspielig. Ebenso sind die Umrichter kostspielig. Außerdem muss ein erhöhter Prüfaufwand getrieben werden, da die Motoren, Umrichter und Kabel im Feld bei der Installation montiert werden und erst dann die Funktion und der Aufbau geprüft werden können. Dabei ist der Stillstand oder die Dauer der Installation mit Prüfung und Inbetriebnahme der gesamten Anlage mit hohen Kosten verbunden.

Aus der EP 0 867 790 ist ein Servosystem bekannt, wobei Servomotoren mit einem Modul verbunden sind, welches Signale, wie insbesondere jeweilige Fehlersignale, der jeweiligen Servomotoren logisch verknüpft. Es enthält keine programmierbare Logik. Die Energieversorgung der Servosysteme erfolgt über das Netz. Der Verkabelungsaufwand ist groß und aufwendig, da für Energie und Daten Kabel jeweils verlegt werden müssen. Zusätzlich ist bei mehreren Verbrauchern das Kabelsystem unübersichtlich und daher bei der Verkabelung fehlerträchtig. Jeder Umrichter muss aus der Netzspannung eine Zwischenkreis-Gleichspannung erzeugen und einen Kondensator für die Zwischenkreisspannung aufweisen, der einen hohen Raumbedarf hat. Sensoren und Aktoren oder andere Antriebe, beispielsweise Asynchronmotoren, sind nicht anschließbar.

Der Erfindung liegt die Aufgabe zugrunde, ein Kabelsystem zur Verkabelung einer Zelle weiterzubilden unter Vermeidung der vorgenannten Nachteile. Insbesondere soll eine einfache übersichtliche Verkabelungsstruktur ermöglicht, möglichst viele Teile eingespart und eine besonders einfache Verkabelung gewährleistet werden.

Erfindungsgemäß wird die Aufgabe bei einem Kabelsystem zur Verkabelung einer Zelle gelöst nach den in Anspruch 1 angegebenen Merkmalen. Ein wesentliches Merkmal der Erfindung ist, dass die Zelle ein Zentralmodul aufweist und dass dieses Zentralmodul jeweils mittels zweiten Starkstromleitungen mit den Antrieben verbindbar ist, wobei die zweiten Starkstromleitungen Gleichspannung aufweisen. Die Umrichter benötigen also die im Stand der Technik vorhandenen Gleichrichterschaltungen nicht. Die sternförmige Verkabelungsstruktur für Daten und Energie ist einfach und übersichtlich. Es kann dabei Kabellänge eingespart werden. Die Verkabelung ist besonders einfach, da jeder Umrichter nur mit dem Zentralmodul verkabelt werden muss. Besonders vorteilhaft ist, dass alle Umrichter auf einen Zwischenkreis zugreifen. Da Umrichter generatorisch oder motorisch betrieben sein können und daher Energie vom Zentralmodul geliefert bekommen können oder an das Zentralmodul liefern können, wird die Auslastungsschwankungsbreite oder - varianz vermindert.

Bei einer vorteilhaften Ausgestaltung umfasst mindestens ein Antrieb einen Elektromotor, einen zugeordneten Umrichter und ein Getriebe, insbesondere ein Planetengetriebe, wobei der Elektromotor, der Umrichter und das Getriebe zusammen eine bauliche Einheit bilden. Besonders vorteilhaft ist dabei die kompakte Bauform des Antriebs, da Teile einer Komponente von einer anderen Komponente funktional ebenfalls genutzt oder eingespart werden können, insbesondere sind Gehäusefunktionen in diesem Sinne mehrfach nutzbar oder einsparbar.

Bei einer vorteilhaften Ausgestaltung ist das Zentralmodul mit einem jeweiligen Antrieb mittels eines jeweiligen Hybridkabels verbindbar, das Starkstromleitungen und elektrische Leitungen zur Informationsübertragung umfasst. Von Vorteil ist dabei, dass der Verkabelungsaufwand erniedrigt wird, da ein Hybridkabel schneller zu verlegen ist. Außerdem ist die Übersichtlichkeit dadurch erhöht. Ein weiterer Vorteil ist, dass das Hybridkabel für die Umrichter in geeigneter Weise ausgewählt werden kann.

Bei einer weiteren vorteilhaften Ausgestaltung ist das Zentralmodul mit einem jeweiligen Antrieb mittels eines jeweiligen Hybridkabels verbindbar ist, das derart gestaltet ist, dass die Informationen mit einer im Vergleich zur Netzfrequenz höheren Frequenz auf- und demodulierbar sind. Von Vorteil ist dabei, dass der Verkabelungsaufwand erniedrigt wird und ein kostengünstiges Standardkabel verwendet werden kann. Außerdem ist die Übersichtlichkeit dadurch erhöht und keine Verkabelung mit Feldbusleitungen notwendig.

Bei einer weiteren vorteilhaften Ausgestaltung werden als Elektromotoren Synchronmotoren verwendet. Von Vorteil ist dabei, dass die Erfindung an einer mit Servo-Stellantrieben ausgestatteten Maschine oder Anlage einsetzbar ist.

Bei einer weiteren vorteilhaften Ausgestaltung ist das Zentralmodul mit einem jeweiligen Antrieb mittels eines jeweiligen Hybridkabels verbindbar, das Starkstromleitungen und Lichtwellenleiter zur Informationsübertragung umfasst. Von Vorteil ist dabei, dass der Verkabelungsaufwand erniedrigt wird, da ein Hybridkabel schneller zu verlegen ist. Außerdem ist die Übersichtlichkeit dadurch erhöht. Ein weiterer Vorteil ist, dass das Hybridkabel für die Umrichter in geeigneter Weise ausgewählt werden kann, bei der Datenübertragung keine Störungen durch elektrische Verbraucher ausgelöst werden können und hohe Datenübertragungsraten möglich sind.

Bei einer vorteilhaften Ausgestaltung weist das Zentralmodul eine programmierbare elektronische Schaltung auf. Von Vorteil ist dabei, dass das Zentralmodul Informationen von den Antrieben, Aktoren und/oder Sensoren der Zelle zusammenfassen, verarbeiten und weitergeben kann an übergeordnete Einheiten. Ebenso können Informationen von den übergeordneten Einheiten an die Antriebe, Aktoren und/oder Sensoren der Zelle weitergegeben oder zuvor für diese verarbeitet werden. Insbesondere können verschiedene Feldbus- oder Systembusprotokolle ineinander verwandelt werden. Dabei sind Systembusprotokolle zwischen dem Zentralmodul und den Antrieben verwendbar und Feldbusprotokolle zwischen dem Zentralmodul und den übergeordneten Einheiten. Ein weiterer Vorteil ist, dass von dem Zentralmodul Steuerungsabläufe oder Steuerungsaufgaben bearbeitbar sind. Dazu zählen Positioniersteuerungsabläufe, von Sensorsignalen abhängige oder unabhängige Steuerungsaufgaben bei einem Antrieb ebenso, wie auch bei mehreren Antrieben. Ein besonders wesentlicher Vorteil ist, dass von den Antrieben Intelligenz oder Rechenleistung in das Zentralmodul verlagerbar ist. Somit werden sogar zwei- oder mehrdimensionale Bahnsteuerungen oder Kurvensteuerungen durchführbar, also Steuerung von mehreren Antrieben in gegenseitiger Abhängigkeit, wie auch Kurvenscheibe und/oder elektronisches Getriebe oder dergleichen.

Bei einer vorteilhaften Ausgestaltung ist das Zentralmodul und insbesondere seine programmierbare elektronische Schaltung derart gestaltet, dass eine Fehlerüberwachung, wie das Zusammenführen der Einzelfehler der Antriebe, das Auswerten, das logische Verknüpfen und das Weitermelden von Informationen, die mit den Einzelfehlermeldungen in einem funktionalen Zusammenhang stehen, oder dergleichen, ausführbar ist. Von Vorteil ist dabei, dass eine dezentrale Fehlerüberwachung für die jeweilige Zelle in übersichtlicher Weise ausführbar ist. Die Fehler der einzelnen Sensoren, Aktoren und/oder Antriebe können dabei mit gleichen oder verschiedenen Gewichtungen und/oder Prioritäten vom Zentralmodul verarbeitet, zusammengefasst angezeigt und/oder weitergegeben werden.

Bei einer weiteren vorteilhaften Ausgestaltung ist das Zentralmodul derart gestaltet, dass eine Rückspeisung von Energie ins Netz über die ersten Starkstromleitungen ausführbar ist. Von Vorteil ist dabei, dass der Energieverbrauch insgesamt vermindert wird und somit Energie eingespart wird.

Bei einer anderen weiteren vorteilhaften Ausgestaltung ist das Zentralmodul derart gestaltet, dass nur ein Bremswiderstand mit dem Zentralmodul verbunden ist. Von Vorteil ist dabei, dass nur ein Bremswiderstand für mehrere Antriebe notwendig ist. Somit werden Kosten eingespart, der Raumbedarf der Antriebe verringert und Verkabelungsaufwand vermindert.

Bei einer weiteren vorteilhaften Ausgestaltung weist der Umrichter jeweils eine programmierbare elektronische Schaltung auf. Von Vorteil ist dabei, dass Rechenleistung vom Zentralmodul auf den Umrichter verlagerbar ist. Daher sind komplexe Steuerungsaufgaben ausführbar. Dazu zählen mindestens Positioniersteuerungsabläufe, Geschwindigkeitssteuerungsabläufe oder dergleichen. Besonders vorteilhaft ist die Möglichkeit des Datenaustausches über das Zentralmodul mit weiteren Sensoren, Aktoren und/oder Antrieben. Daher sind sensorsignalabhängige Steuerungsabläufe ausführbar. Ebenso sind aber auch Steuerungsabläufe in gegenseitiger Abhängigkeit, wie zwei- oder mehrdimensionale Steuerungsabläufe, ausführbar, wobei Daten mit hoher Datenübertragungsrate über das Zentralmodul ausgetauscht werden.

Bei einer weiteren vorteilhaften Ausgestaltung ist das Hybridkabel jeweils derart mit dem Antrieb, umfassend einen Elektromotor und Umrichter, verbunden, dass das Hybridkabel, der Elektromotor und der Umrichter zusammen eine Komponente bilden, die derart gestaltet ist, dass sie vor dem Anschluss an das Zentralmodul, also dem Einbau in die Zelle, prüfbar ist. Von Vorteil ist dabei, dass die Komponente kompakt ausführbar ist und bei der Fertigung und insbesondere als letztem Fertigungsschritt die Komponente einer Qualitätsprüfung unterziehbar ist. Danach liegt also eine geprüfte Komponente für den Einbau in die Zelle vor. Dies verringert besonders vorteilhaft den Zeitbedarf bei Installation und Inbetriebnahme der Zelle. Bei einer weiteren Ausgestaltung gleicht die Komponente einem Gehäuse, aus welchem ein Kabel herausführt. Dabei ist vorteilhaft, dass die Komponente in hoher Schutzart fertigbar ist und danach fertig und geprüft in die Zelle einbaubar ist.

Bei einer weiteren vorteilhaften Ausgestaltung weist die bauliche Einheit jeweils als Anschlusseinrichtungen für das Hybridkabel funktions- und verpolungssichere Vorrichtungen, insbesondere Hybridstecker mit Verpolungsschutz, auf. Von Vorteil ist dabei, dass Verpolungen verhindert werden.

Bei einer weiteren vorteilhaften Ausgestaltung ist das Kabelsystem derart gestaltet, dass die Informationen in einem Feldbusprotokoll codiert sind. Von Vorteil ist dabei, dass in einer standardisierten Weise Informationen übertragbar sind und entsprechende elektronische Schaltungen verwendbar sind. Insbesondere sind vorgefertigte elektronische Bausteine kostengünstig verwendbar.

Bei einer weiteren vorteilhaften Ausgestaltung weist die bauliche Einheit jeweils als Anschlusseinrichtungen für das Hybridkabel funktions- und verpolungssichere Vorrichtungen, insbesondere Hybridstecker mit Verpolungsschutz, auf.

Weitere vorteilhafte Ausgestaltungen ergeben sich aus den Unteransprüchen.

### Bezugszeichenliste

- 1: Synchronmotor
- 2: Umrichter
- 3: Planetengetriebe
- 4: Sensor
- 5: Aktor
- 6: Drehstromnetzkabel (erste Starkstromkabel)
- 7: Feldbuskabel
- 8: Zentralmodul
- 9: Hybridkabel (, umfassend zweite Starkstromleitungen)
- 10: Zelle, Automatisierungszelle

Die Erfindung wird nun anhand von einer Abbildung näher erläutert:

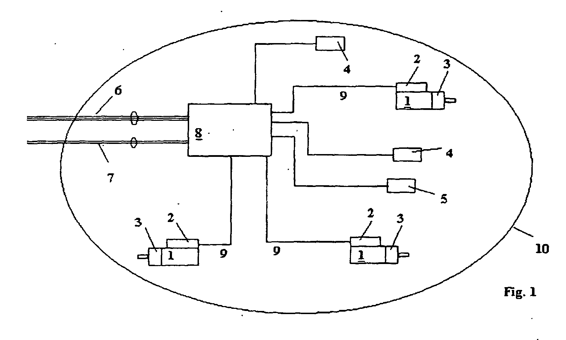

In der Figur 1 ist eine erfindungsgemäße Automatisierungszelle oder Zelle 10 gezeigt. Das Zentralmodul 8 ist mittels eines ersten Starkstromkabels an das Netz angeschlossen, wobei das erste Starkstromkabel durch ein handelübliches Drehstromkabels 6 realisiert wird. Über das Feldbuskabel 7 ist das Zentralmodul 8 mit übergeordneten Einheiten, insbesondere einer zentralen Anlagensteuerung, verbunden. Informationen werden im Feldbus-Protokoll mit der übergeordneten Einheit ausgetauscht.

Die Sensoren 4 sind an das Zentralmodul 8 angeschlossen. Ebenfalls angeschlossen sind Aktoren 5 und Antriebe, welche jeweils einen Synchronmotor 1, einen Umrichter 2 und Getriebe oder Planetengetriebe 3 umfassen. Das Zentralmodul 8 ist über ein Hybridkabel 9 mit den Antrieben verbunden, wobei das Hybridkabel zwei Leitungen für Hochspannungs-Starkstrom, Leitungen für 24V-Versorgungsspannungen und Leitungen für Datenübertragung, insbesondere Feldbus oder Systembus. (Aus dem Handbuch und der Bedienungsanleitung MOVIDRIVE der Firma SEW-EURODRIVE GmbH aus dem Jahre 1998 ist ein solcher Systembus beispielhaft bekannt.) Das Zentralmodul 8 erzeugt aus der Wechselspannung des Netzes eine Gleichspannung, die als Zwischenkreisspannung von den Umrichtern 2 der Antriebe verwendbar ist und mittels der Hybridkabel 9 vom Zentralmodul 8 dem Antrieb zugeleitet wird. Das Hybridkabel 9 stellt also den gemeinsamen Zwischenkreis allen Umrichtern 2 zur Verfügung. Dadurch ist es möglich, Energie von generatorisch arbeitenden Antrieben motorisch arbeitenden Antrieben zuzuführen. Falls mehr Energie generatorisch erzeugt wird als motorisch verbraucht wird und der Zwischenkreiskondensator maximal zulässig aufgeladen ist, wird bei einer weiteren vorteilhaften Ausgestaltung die Energie des Zwischenkreises einem ohmschen Verbraucher, wie Bremswiderstand oder dergleichen, zugeführt und in Wärme umgesetzt. Das Hybridkabel 9 umfaßt die erfindungsgemäßen zweiten Starkstromleitungen.

Bei einer weiteren vorteilhaften Ausgestaltung wird in diesem Fall eine Rückspeisung des Zentralmoduls aktiviert. Dadurch kann die Energie ins Netz über die Drehstromnetzkabel 6 gespeist werden und der Bremswiderstand verkleinert oder eingespart werden.

In einer weiteren vorteilhaften Ausgestaltung umfasst das Hybridkabel 9 Leitungen für Hochspannungs-Starkstrom, Leitungen für 24V-Versorgungsspannungen und Lichtwellenleiter zur Datenübertragung. Zentralmodul 8 und Umrichter 2 weisen entsprechende elektrooptische Wandler auf.

In einer weiteren vorteilhaften Ausgestaltung bildet der Antrieb, umfassend den Synchronmotor und den zugeordneten Umrichter, eine bauliche Einheit. In einer anderen Ausgestaltung bildet der Antrieb, umfassend den Synchronmotor, den zugeordneten Umrichter und das Planetengetriebe, eine bauliche Einheit. Von Vorteil ist dabei der kompakte raumsparende Aufbau und das Einsparen von Kabellänge. Bei einer besonders kompakten Ausgestaltung können sogar Gehäuseaufgaben und -funktionen für Umrichter, Getriebe und/oder Motor von einem Teil des Gehäuses gemeinsam erfüllt werden. Ebenso kann dies bei der Auslegung oder mechanischen Konstruktion eingeplant werden. Bei einer weiteren vorteilhaften Ausgestaltung sind Getriebe, Umrichter und/oder Motor thermisch entkoppelt über Wärmesperren, wie Kunststoffteile, Isolierungen oder dergleichen. Bei einer weiteren vorteilhaften Ausgestaltung werden die elektrischen Kontakte zwischen Umrichter und Motor mittels Steckverbinder erreicht. Der Umrichter kann dabei auf den Klemmenkasten eines Motors aufsetzen und sozusagen dessen Deckel als Oberteil ersetzen. Dabei kann ein den Klemmenkasten ersetzendes Zwischenteil eingebaut werden, das Anschlussvorrichtungen enthält. Das Oberteil weist dann insbesondere eine Kühlvorrichtung auf. Sogar ausschließlich konvektive Kühlung ist möglich bei geeigneter Auswahl von Kühlrippen oder Kühlfinger, wobei letztere die Möglichkeit erschließen, unabhängig von der Einbauorientierung eine sehr gute Kühlleistung zu erzielen.

In einer weiteren vorteilhaften Ausgestaltung bildet der Antrieb, umfassend den Synchronmotor und den zugeordneten Umrichter, zusammen mit dem Hybridkabel eine Komponente, der schon geprüft zum Einbau in die Zelle angeliefert wird. Dadurch wird Installations-, Prüf- und Inbetriebnahme-Aufwand vermindert. Außerdem kann dabei die Komponente in einfacher Weise in hoher Schutzart konstruiert und gefertigt werden, da ein Öffnen bei Installation nicht erforderlich ist.

In einer weiteren vorteilhaften Ausgestaltung weist das Hybridkabel 9 funktions- und verpolungssichere Hybrid-Steckverbinder einerseits zum Zentralmodul 8 auf, andererseits auch zum Umrichter 2. Umrichter 2 und Zentralmodul 8 weisen entsprechende Hybrid-Steckverbinder auf.

Besonders wichtig ist eine weitere vorteilhaften Ausgestaltung, bei der das Zentralmodul Anschlussmöglichkeiten zum Anschluss von Sensoren und/oder Aktoren aufweist. Somit kann das Zentralmodul mit seiner elektronischen Schaltung komplexe Steuerungsaufgaben wahrnehmen, insbesondere sensorsignalabhängige Positioniersteuerungsaufgaben. Da aber das Zentralmodul auch verbunden ist mit den Antrieben, sind auch Steuerungsvorgänge von mindestens zwei Antrieben in gegenseitiger Abhängigkeit, insbesondere zwei- oder mehrdimensionale Bahn- und Kurvensteuerungen, programmierbar.

In einer weiteren vorteilhaften Ausgestaltung ist die elektronische Schaltung der Umrichter 2 derart gestaltet, dass sie genügend Rechenleistung für eine in die Umrichter integrierte Positioniersteuerung aufweist. Informationen von Sensoren werden über das Zentralmodul an den jeweiligen Umrichter geliefert. Der Umrichter kann dann den Motor in Abhängigkeit der entsprechenden Sensorsignale steuern und positionieren. Da auch die Informationen der anderen Umrichter über das Zentralmodul übertragen werden können, können dann vom Umrichter auch Steuerungsvorgänge in gegenseitiger Abhängigkeit, insbesondere zwei- oder mehrdimensionale Bahn- und Kurvensteuerungen, elektronisches Getriebe, Kurvenscheibe oder dergleichen, ausgeführt werden.

In einer weiteren vorteilhaften Ausgestaltung übernimmt das Zentralmodul die Aufgabe, die Fehler der einzelnen Antriebe, Sensoren und/oder Aktoren zu überwachen, auszuwerten, anzuzeigen und davon abhängige spezielle Informationen, auch an die übergeordneten Einheiten, weiterzuleiten und/oder Vorgänge, wie Abläufe oder dergleichen, bei den Aktoren und/oder Antrieben auszulösen.

## Patentansprüche

1. Kabelsystem zur Verkabelung einer Zelle (10),
wobei die Zelle (10) mindestens ein Zentralmodul (8) und Antriebe (1-3) umfasst,
und wobei das Zentralmodul (8) der Zelle (10) über erste Starkstromleitungen (6) mit dem Netz verbindbar ist,
und wobei dem Zentralmodul (8) von übergeordneten Einheiten Informationen, wie Daten oder Programme, zuführbar sind,
und wobei von dem Zentralmodul (8) an übergeordnete Einheiten Informationen, wie Daten oder Programme, übertragbar sind,
und wobei erste Starkstromleitungen (6) Wechselspannung, insbesondere Netzspannung, aufweisen,
und die Antriebe (1-3) Elektromotoren (1)
und jeweils zugeordnete Umrichter (2) umfassen,
**dadurch gekennzeichnet, dass**
Umrichter (2) und Elektromotor (1) zusammen jeweils eine bauliche Einheit bilden,
und dass die Antriebe (1-3) jeweils mit zweiten Starkstromleitungen (9) mit dem Zentralmodul (8) sternförmig verbindbar sind,
und dass zweite Starkstromleitungen (9) unipolare Spannung, wie Gleichspannung, pulsierende Gleichspannung oder Zwischenkreisspannung von Umrichtern (2), aufweisen,
und dass die Mittel zur Übertragung der Informationen vom Zentralmodul (8) zum jeweiligen Antrieb (1-3) und zurück sternförmig ausführbar sind.

2. Kabelsystem nach Anspruch 1,
**dadurch gekennzeichnet, dass**
die Elektromotoren Synchronmotoren (1) sind.

3. Kabelsystem nach Anspruch 1 oder 2,
**dadurch gekennzeichnet, dass**
mindestens ein Antrieb (1-3) einen Elektromotor (1), einen zugeordneten Umrichter (2) und ein Getriebe (3), insbesondere ein Planetengetriebe (3), umfasst,
und dass der Elektromotor (1), der Umrichter (2) und das Getriebe (3) zusammen eine bauliche Einheit bilden.

4. Kabelsystem nach Anspruch mindestens einem der vorangegangenen Ansprüche,
**dadurch gekennzeichnet, dass**
das Zentralmodul (8) mit einem jeweiligen Antrieb (1-3) mittels eines jeweiligen Hybridkabels (9) verbindbar ist.

5. Kabelsystem nach Anspruch 4,
**dadurch gekennzeichnet, dass**
das Zentralmodul (8) mit einem jeweiligen Antrieb (1-3) mittels eines jeweiligen Hybridkabels (9) verbindbar ist, das Starkstromleitungen (9) und elektrische Leitungen zur Informationsübertragung umfasst.

6. Kabelsystem nach Anspruch 4,
**dadurch gekennzeichnet, dass**
das Zentralmodul (8) mit einem jeweiligen Antrieb (1-3) mittels eines jeweiligen Hybridkabels (9) verbindbar ist, das Starkstromleitungen (9) und Lichtwellenleiter zur Informationsübertragung umfasst.

7. Kabelsystem nach Anspruch 4,
**dadurch gekennzeichnet, dass**
das Zentralmodul (8) mit einem jeweiligen Antrieb (1-3) mittels eines jeweiligen Hybridkabels (9) verbindbar ist, das derart gestaltet ist, dass die Informationen mit einer im Vergleich zur Netzfrequenz höheren Frequenz auf- und demodulierbar sind.

8. Kabelsystem nach Anspruch 7,
**dadurch gekennzeichnet, dass**
das Zentralmodul (8) eine elektronische Schaltung aufweist, die derart gestaltet ist, dass Informationen mit einer im Vergleich zur Netzfrequenz höheren Frequenz auf das Hybridkabel (9) auf- und von diesem demodulierbar sind und eine Unterdrückung von Störsignalen mittels Hardware und/oder Software ausführbar ist.

9. Kabelsystem nach Anspruch 7,
**dadurch gekennzeichnet, dass**
der Umrichter (2) jeweils eine elektronische Schaltung aufweist, die derart gestaltet ist, dass Informationen mit einer im Vergleich zur Netzfrequenz höheren Frequenz auf das Hybridkabel (9) auf- und von diesem demodulierbar sind und eine Unterdrückung von Störsignalen mittels Hardware und/oder Software ausführbar ist.

10. Kabelsystem nach mindestens einem der vorangegangenen Ansprüche,
**dadurch gekennzeichnet, dass**
als Hybridkabel (9) ein handelsübliches Drehstromkabel mit Starkstromleitungen (9) für drei Drehstromphasen, Nullleiter und Schutzleiter mit oder ohne Abschirmung verwendet wird.

11. Kabelsystem nach mindestens einem der vorangegangenen Ansprüche,
**dadurch gekennzeichnet, dass**
Hybridkabel (9) zwei Starkstromleitungen (9), Leitungen für mindestens eine 24V-Versorgungsspannung und Leitungen für Übertragung von Informationen, wie Informationen im Feldbus- oder Systembusprotokoll umfassen.

12. Kabelsystem nach mindestens einem der vorangegangenen Ansprüche,
**dadurch gekennzeichnet, dass**
das Kabelsystem derart gestaltet ist, dass die Informationen in einem Feldbusprotokoll codiert sind.

13. Kabelsystem nach mindestens einem der vorangegangenen Ansprüche,
**dadurch gekennzeichnet, dass**
das Zentralmodul (8) eine programmierbare elektronische Schaltung aufweist.

14. Kabelsystem nach Anspruch 13,
**dadurch gekennzeichnet, dass**
das Zentralmodul (8) und seine programmierbare elektronische Schaltung derart gestaltet ist, dass eine Fehlerüberwachung, wie Zusammenführen der Einzelfehler der Antriebe (1-3), Auswerten, logisches Verknüpfen, Weitermelden von Informationen, die mit den Einzelfehlermeldungen in einem funktionalen Zusammenhang stehen, Anzeigen oder dergleichen, ausführbar ist.

15. Kabelsystem nach mindestens einem der vorangegangenen Ansprüche,
**dadurch gekennzeichnet, dass**
das Zentralmodul (8) mit seiner programmierbaren elektronischen Schaltung derart gestaltet ist, dass komplexe Steuerungsvorgänge ausführbar sind, wie Ablaufsteuerungsvorgänge, Positioniersteuerungsvorgänge und Steuerungsvorgänge von mindestens zwei Antrieben in gegenseitiger Abhängigkeit, insbesondere zwei- oder mehrdimensionale Bahn- und Kurvensteuerungen.

16. Kabelsystem nach mindestens einem der vorangegangenen Ansprüche,
**dadurch gekennzeichnet, dass**
das Zentralmodul(8) derart gestaltet ist, dass eine Rückspeisung von Energie ins Netz über die ersten Starkstromleitungen (6) ausführbar ist.

17. Kabelsystem nach mindestens einem der vorangegangenen Ansprüche,
**dadurch gekennzeichnet, dass**
das Zentralmodul (8) derart gestaltet ist, dass nur ein Bremswiderstand mit dem Zentralmodul (8) verbunden ist.

18. Kabelsystem nach mindestens einem der vorangegangenen Ansprüche,
**dadurch gekennzeichnet, dass**
das Zentralmodul (8) dicht und fest, also in hoher Schutzart, ausgeführt ist und unter Feldbedingungen einsetzbar ist.

19. Kabelsystem nach mindestens einem der vorangegangenen Ansprüche,
**dadurch gekennzeichnet, dass**
der Umrichter (2) jeweils eine programmierbare elektronische Schaltung aufweist.

20. Kabelsystem nach mindestens einem der vorangegangenen Ansprüche,
**dadurch gekennzeichnet, dass**
der Umrichter (2) jeweils derart gestaltet ist, dass eine integrierte Positioniersteuerung umfasst und Positioniersteuerungsvorgänge ausführbar sind.

21. Kabelsystem nach mindestens einem der vorangegangenen Ansprüche,
**dadurch gekennzeichnet, dass**
das Hybridkabel (9) jeweils derart mit einem Elektromotor (1) mit Umrichter (2) verbunden ist, dass das Hybridkabel (9), der Elektromotor (1) und der Umrichter (2) zusammen eine Komponente bilden, die derart gestaltet ist, dass sie vor dem Anschluss an das Zentralmodul (8), also dem Einbau in die Zelle (10), prüfbar ist.

22. Kabelsystem nach mindestens einem der vorangegangenen Ansprüche,
**dadurch gekennzeichnet, dass**
die bauliche Einheit jeweils als Anschlusseinrichtungen für das Hybridkabel (9) funktions- und verpolungssichere Vorrichtungen, insbesondere Hybridstecker mit Verpolungsschutz, aufweist.

23. Kabelsystem nach mindestens einem der vorangegangenen Ansprüche,
**dadurch gekennzeichnet, dass**
das Zentralmodul (8) jeweils als Anschlusseinrichtungen für das Hybridkabel (9) funktions- und verpolungssichere Vorrichtungen, insbesondere Hybridstecker mit Verpolungsschutz, aufweist.

24. Kabelsystem nach mindestens einem der vorangegangenen Ansprüche,
**dadurch gekennzeichnet, dass**
das Zentralmodul (8) Anschlussmöglichkeiten zum Anschluss von Sensoren und/oder Aktoren aufweist.

## Claims

1. A cable system for wiring a cell (10),
wherein the cell (10) comprises at least one central module (8) and drives (1 to 3),
and wherein the central module (8) of the cell (10) is capable of being connected to the mains by way of first heavy-current lines (6),
and wherein information, such as data or programs, is capable of being supplied to the central module (8) from overriding units,
and wherein information, such as data or programs, is capable of being transmitted from the central module (8) to overriding units,
and wherein first heavy-current lines (6) have alternating-current voltage, in particular mains voltage,
and the drives (1 to 3) comprise electric motors (1)
and inverters (2) associated in each case,
**characterized in that**
an inverter (2) and an electric motor (1) together form a structural unit in each case,
and the drives (1 to 3) are capable of being connected in a star arrangement by respective second heavy-current lines (9) to the central module (8) in each case,
and second heavy-current lines (9) have unipolar voltage, such as direct-current voltage, pulsating d.c. voltage or intermediate-circuit voltage from inverters (2),
and it is possible for the means for transmitting the information from the central module (8) to the respective drive (1 to 3) and back to be designed in a star arrangement.

2. A cable system according to Claim 1, **characterized in that** the electric motors are synchronous motors (1).

3. A cable system according to Claim 1 or 2, **characterized in that** at least one drive (1 to 3) comprises an electric motor (1), an associated inverter (2) and a gearing (3), in particular a planetary gearing (3), and the electric motor (1), the inverter (2) and the gearing (3) together form a structural unit.

4. A cable system according to Claim at least one of the preceding Claims, **characterized in that** the central module (8) is capable of being connected to a respective drive (1 to 3) by means of a respective hybrid cable (9) in each case.

5. A cable system according to Claim 4, **characterized in that** the central module (8) is capable of being connected to a respective drive (1 to 3) by means of a respective hybrid cable (9) in each case, which hybrid cable (9) comprises heavy-current lines (9) and electrical lines for the transmission of information.

6. A cable system according to Claim 4, **characterized in that** the central module (8) is capable of being connected to a respective drive (1 to 3) by means of a respective hybrid cable (9) in each case, which hybrid cable (9) comprises heavy-current lines (9) and optical fibres for the transmission of information.

7. A cable system according to Claim 4, **characterized in that** the central module (8) is capable of being connected to a respective drive (1 to 3) by means of a respective hybrid cable (9) in each case, which hybrid cable (9) is designed in such a way that the information can be modulated and demodulated at a frequency higher than the mains frequency.

8. A cable system according to Claim 7, **characterized in that** the central module (8) has an electronic circuit which is designed in such a way that the information is capable of being modulated on the hybrid cable (9) and demodulated from it at a frequency higher than the mains frequency, and it is possible for suppression of interference signals to be carried out by means of hardware and/or software.

9. A cable system according to Claim 7, **characterized in that** the inverter (2) has a respective electronic circuit which is designed in such a way that information is capable of being modulated on the hybrid cable (9) and demodulated from it at a frequency higher than the mains frequency, and it is possible for suppression interference signals to be carried out by means of hardware and/or software.

10. A cable system according to at least one of the preceding Claims, **characterized in that** a commercially available three-phase current cable with heavy-current lines (9) for three rotary-current phases, a zero conductor and a protective conductor with or without shielding is used as the hybrid cable (9).

11. A cable system according to at least one of the preceding Claims, **characterized in that** the hybrid cables (9) comprise two heavy-current lines (9), lines for at least one 24 V supply voltage and lines for transmitting information, such as information in a field-bus or a backplane-bus protocol.

12. A cable system according to at least one of the preceding Claims, **characterized in that** the cable system is designed in such a way that the information is encoded in a field-bus protocol.

13. A cable system according to at least one of the preceding Claims, **characterized in that** the central module (8) has a programmable electronic circuit.

14. A cable system according to Claim 13, **characterized in that** the central module (8) and its programmable electronic circuit are designed in such a way that it is possible to carry out an error control, such as bringing together the individual errors of the drives (1 to 3), evaluation, logical interconnexion, further reporting of information which is linked to the individual-error reports in a functional relation, displays or the like.

15. A cable system according to at least one of the preceding Claims, **characterized in that** the central module (8) together with its programmable electronic circuit is designed in such a way that it is possible to carry out complex control procedures, such as run-off control procedures, position control procedures and control procedures of at least two drives in interdependence, in particular two-dimensional or multi-dimensional path and curve controls.

16. A cable system according to at least one of the preceding Claims, **characterized in that** the central module (8) is designed in such a way that it is possible to carry out back-feeding of energy into the mains by way of the first heavy-current lines (6).

17. A cable system according to at least one of the preceding Claims, **characterized in that** the central module (8) is designed in such a way that only one braking resistor is connected to the central module (8).

18. A cable system according to at least one of the preceding Claims, **characterized in that** the central module (8) is made thick and firm, *i.e.* with a high degree of protection, and is capable of being used under field conditions.

19. A cable system according to at least one of the preceding Claims, **characterized in that** the inverter (2) has a respective programmable electronic circuit in each case.

20. A cable system according to at least one of the preceding Claims, **characterized in that** the inverter (2) is designed in such a way in each case that it comprises an integrated position control, and it is possible to carry out position control procedures.

21. A cable system according to at least one of the preceding Claims, **characterized in that** the hybrid cable (9) is connected in each case to an electric motor (1) with an inverter (2) in such a way that the hybrid cable (9), the electric motor (1) and the inverter (2) together form a component which is designed in such a way that it is capable of being tested before being attached to the central module (8), *i.e.* before being inserted into the cell (10).

22. A cable system according to at least one of the preceding Claims, **characterized in that** the structural unit has functionally reliable and polarity-reliable devices, in particular hybrid plugs with polarity protection, as attachment devices for the hybrid cable (9) in each case.

23. A cable system according to at least one of the preceding Claims, **characterized in that** the central module (8) has functionally reliable and polarity-reliable devices, in particular hybrid plugs with polarity protection, as attachment devices for the hybrid cable (9) in each case.

24. A cable system according to at least one of the preceding Claims, **characterized in that** the central module (8) has attachment capabilities for the attachment of sensors and/or actuators.

## Revendications

1. Système de câbles pour le câblage d'une cellule (10), dans lequel
la cellule (10) comprend au moins un module central (8) et des entraînements (1-3),
le module central (8) de la cellule (10) peut être raccordé au secteur au moyen de premières lignes à courant fort (6),
des informations, telles que des données ou des programmes, peuvent être envoyées au module central (8) par des unités en amont ou hiérarchiquement supérieurs,
des informations, telles que des données ou des programmes, peuvent être transmises par le module central (8) à des unités en amont ou hiérarchiquement supérieurs,
des premières lignes à courant fort (6) présentent une tension alternative, en particulier la tension du secteur,
et les entraînements (1-3) présentent des moteurs électriques (1)
et des variateurs de vitesse (2) chaque fois associés,
**caractérisé par le fait**
**que** variateur de vitesse (2) et moteur électrique (1) forment chaque fois ensemble une unité structurale,
**que** les entraînements (1-3) peuvent être reliés chaque fois en étoile au module central (8) par des deuxièmes lignes à courant fort (9),
**que** les deuxièmes lignes à courant fort (9) présentent une tension unipolaire, telle qu'une tension alternative ou continue, une tension alternative pulsée ou une tension de circuit intermédiaire de variateurs de vitesse (2),
et **que** les moyens de transmission des informations du module central (8) à l'entraînement respectif (1-3) et retour peuvent être réalisés en étoile.

2. Système de câbles selon la revendication 1,
**caractérisé par le fait**
**que** les moteurs électriques sont des moteurs synchrones (1).

3. Système de câbles selon la revendication 1 ou 2,
**caractérisé par le fait**
**qu'**au moins un entraînement (1-3) comprend un moteur électrique (1), un variateur de vitesse associé (2) et un réducteur (3), en particulier un réducteur planétaire,
et **que** le moteur électrique (1), le variateur de vitesse (2) et le réducteur (3) forment ensemble une unité structurale.

4. Système de câbles selon au moins l'une des revendications précédentes,
**caractérisé par le fait**
**que** le module central (8) peut être relié à un entraînement (1-3) respectif au moyen d'un câble hybride (9) respectif

5. Système de câbles selon la revendication 4,
**caractérisé par le fait**
**que** le module central (8) peut être relié à un entraînement (1-3) respectif au moyen d'un câble hybride (9) respectif qui comprend des lignes à courant fort (9) et des lignes électriques pour la transmission des informations.

6. Système de câbles selon la revendication 4,
**caractérisé par le fait**
**que** le module central (8) peut être relié à un entraînement (1-3) respectif au moyen d'un câble hybride (9) respectif qui comprend des lignes à courant fort (9) et des fibre optiques pour la transmission des informations.

7. Système de câbles selon la revendication 4,
**caractérisé par le fait**
**que** le module central (8) peut être relié à un entraînement (1-3) respectif au moyen d'un câble hybride (9) respectif qui est conçu de telle manière que les informations sont modulables et démodulables à une fréquence élevée par rapport à la fréquence du secteur.

8. Système de câbles selon la revendication 7,
**caractérisé par le fait**
**que** le module central (8) présente un circuit électronique qui est conçu de telle manière que les informations sont modulables et démodulables par celui-ci à une fréquence élevée par rapport à la fréquence du secteur sur le câble hybride (9) et qu'il est possible d'effectuer une suppression des signaux parasites par matériel et/ou logiciel.

9. Système de câbles selon la revendication 7,
**caractérisé par le fait**
**que** le variateur de vitesse (2) présente un circuit électronique qui est conçu de telle manière que les informations sont modulables et démodulables par celui-ci à une fréquence élevée par rapport à la fréquence du secteur sur le câble hybride (9) et qu'il est possible d'effectuer une suppression des signaux parasites par matériel et/ou logiciel.

10. Système de câbles selon au moins l'une des revendications précédentes,
**caractérisé par le fait**
**que** l'on utilise comme câble hybride (9) un câble à courant triphasé (9) de type courant pour trois phases de courant triphasé, conducteur neutre et conducteur de protection avec ou sans blindage.

11. Système de câbles selon au moins l'une des revendications précédentes,
**caractérisé par le fait**
**que** les câbles hybrides (9) comprennent deux lignes à courant fort, des lignes pour au moins une tension d'alimentation 24 V et des lignes pour la transmission d'informations, telles que des informations dans un protocole de bus de terrain ou de bus système.

12. Système de câbles selon au moins l'une des revendications précédentes,
**caractérisé par le fait**
**que** le système de câbles est conçu de telle manière que les informations sont codées dans un protocole de bus de terrain.

13. Système de câbles selon au moins l'une des revendications précédentes,
**caractérisé par le fait**
**que** le module central (8) présente un circuit électronique programmable.

14. Système de câbles selon la revendication 13,
**caractérisé par le fait**
**que** le module central (8) et son circuit électronique programmable sont conçus de telle manière qu'il est possible d'effectuer une surveillance de défauts, comme la concentration des défauts individuels des entraînements (1-3), l'évaluation, la combinaison logique et la retransmission d'informations qui sont en relation fonctionnelle avec les messages de défauts individuels, l'affichage ou analogue.

15. Système de câbles selon au moins l'une des revendications précédentes,
**caractérisé par le fait**
**que** le module central (8) et son circuit électronique programmable sont conçus de telle manière qu'il est possible d'exécuter des processus de commande complexes, comme des processus de commande séquentielle, des processus de commande de positionnement et des processus de commande d'au moins deux entraînements interdépendants, en particulier des commandes de contournage et des commandes par cames bi- ou multidimensionnelles.

16. Système de câbles selon au moins l'une des revendications précédentes,
**caractérisé par le fait**
**que** le module central (8) est conçu de telle manière qu'il est possible d'effectuer une réinjection d'énergie dans le secteur par les premières lignes à courant fort (6).

17. Système de câbles selon au moins l'une des revendications précédentes,
**caractérisé par le fait**
**que** le module central (8) est conçu de telle manière qu'une seule résistance de freinage est reliée au module central (8).

18. Système de câbles selon au moins l'une des revendications précédentes,
**caractérisé par le fait**
**que** le module central (8) est exécuté de manière étanche et robuste, donc avec un type de protection élevé, et peut être utilisé dans les conditions du terrain.

19. Système de câbles selon au moins l'une des revendications précédentes,
**caractérisé par le fait**
**que** le variateur de vitesse (2) présente chaque fois un circuit électronique programmable.

20. Système de câbles selon au moins l'une des revendications précédentes,
**caractérisé par le fait**
**que** le variateur de vitesse (2) est conçu chaque fois de telle manière qu'il comprend une commande de positionnement et peut exécuter des processus de commande de positionnement.

21. Système de câbles selon au moins l'une des revendications précédentes,
**caractérisé par le fait**
**que** le câble hybride (9) est chaque fois relié à un moteur électrique (1) avec variateur de vitesse (2) de telle manière que le câble hybride (9), le moteur électrique (1) et le variateur de vitesse (2) forment ensemble un composant qui est conçu de manière à pouvoir être contrôlé avant la connexion au module central (8), c'est-à-dire avant le montage dans la cellule (10).

22. Système de câbles selon au moins l'une des revendications précédentes,
**caractérisé par le fait**
**que** l'unité structurale présente chaque fois en guise de dispositifs de connexion pour le câble hybride (9) des dispositifs à sécurité de fonctionnement et protection contre l'inversion de polarité, en particulier des connecteurs hybrides avec détrompage.

23. Système de câbles selon au moins l'une des revendications précédentes,
**caractérisé par le fait**
**que** le module central (8) présente chaque fois en guise de dispositifs de connexion pour le câble hybride (9) des dispositifs à sécurité de fonctionnement et protection contre l'inversion de polarité, en particulier des connecteurs hybrides avec détrompage.

24. Système de câbles selon au moins l'une des revendications précédentes,
**caractérisé par le fait**
**que** le module central (8) présente des possibilités de connexion pour connecter des capteurs et/ou actionneurs.
